# EUROPÄISCHE PATENTANMELDUNG

(11) **EP 3 499 200 A1**
(43) Veröffentlichungstag der Anmeldung: **19.06.2019**
(21) Anmeldenummer: 17207508.7
(22) Anmeldetag: 14.12.2017
(51) Int. Cl.: G01J 3/02, G01J 3/12, G01J 3/26, G01N 21/64

(54) **DURCHSTIMMBARER FILTERMONOCHROMATOR**

(71) Anmelder: Berthold Technologies GmbH & Co. KG, 75323 Bad Wildbad (DE)
(72) Erfinder: Klaiber, Norbert, 75337 Enzklösterle (DE); Zeller, Joachim, 75328 Schömberg (DE)
(74) Vertreter: Patentanwälte Ruff, Wilhelm, Beier, Dauster & Partner mbB

(57) **Zusammenfassung**

Ein durchstimmbarer Filtermonochromator (200) zur spektralen Isolierung eines engen spektralen Passbereichs vorgebbarer Bandbreite um eine vorgebbare Zentralwellenlänge aus einer einfallenden Lichtintensität mit größerer spektraler Bandbreite ist so ausgelegt, dass die Bandbreite und die Zentralwellenlänge des spektralen Passbereichs unabhängig voneinander stufenlos einstellbar sind. Der Filtermonochromator umfasst einen ersten Filterhalter (220) zur Aufnahme eines ersten linear variablen Kantenfilters (225), wobei der erste Filterhalter parallel zu einer Verschiebungsrichtung (215) linear verschiebbar geführt ist, sowie einen zweiten Filterhalter (240) zur Aufnahme eines zweiten linear variablen Kantenfilters (245), wobei der zweite Filterhalter parallel zu der Verschiebungsrichtung (215) linear verschiebbar geführt ist. Die Kantenfilter (225, 245) sind im betriebsfertig montierten Zustand des Filtermonochromators im Strahlengang des Filtermonochromators hintereinander geschaltet. Eines der Kantenfilter ist ein Langpassfilter, das eine obere Kantenwellenlänge definiert, während das andere Kantenfilter ein Kurzpassfilter ist und eine untere Kantenwellenlänge definiert. Der Filtermonochromator weist zur Verschiebung des ersten Filterhalters (220) und des zweiten Filterhalters (240) nur einen einzigen Stellantrieb (260) auf, so dass die Zentralwellenlänge und die Bandbreite des Filtermonochromators durch Ansteuerung desselben Stellantriebs (260) unabhängig voneinander stufenlos einstellbar sind.

## Beschreibung

Die Erfindung betrifft einen durchstimmbaren Filtermonochromator zur spektralen Isolierung eines engen spektralen Passbereichs vorgebbarer Bandbreite um eine vorgebbare Zentralwellenlänge aus einer einfallenden Lichtintensität mit größerer spektraler Bandbreite, wobei die Bandbreite und die Zentralwellenlänge des spektralen Passbereichs unabhängig voneinander stufenlos einstellbar sind. Weiterhin betrifft die Erfindung eine mit mindestens einem solchen Filtermonochromator ausgestattete Vorrichtung zum spektral aufgelösten Messen optischer Eigenschaften von Proben, insbesondere zur Ermittlung von Fluoreszenzeigenschaften von Proben.

In der biochemischen und pharmakologischen Forschung und im klinischen Bereich werden häufig Verfahren und Vorrichtungen zum spektroskopischen Messen optischer Eigenschaften von Proben genutzt, die eine Charakterisierung von Probeneigenschaften über eine Messung der Fluoreszenz, der Lumineszenz und/oder der Absorption erlauben.

Bei der Messung der Fluoreszenz wird die Probe über einen ersten optischen Pfad (meist Anregungspfad genannt) mit Anregungslicht einer bestimmten Anregungswellenlänge beaufschlagt und dadurch in der Probe Fluoreszenzlicht erzeugt. Das aus der Probe emittierte Fluoreszenzlicht (Emissionslicht), welches gegenüber dem Anregungslicht normalerweise zu längeren Wellenlängen (niedrigeren Energien) verschoben ist, wird in einem zweiten optischen Pfad (meist als Emissionspfad bezeichnet) einem Detektor zugeleitet, mit dem die resultierenden Intensitäten gemessen werden. Bei Absorptionsmessungen wird das durch die Probe transmittierte Licht gemessen, dessen Intensität aufgrund von Absorption in der Probe geringer ist als die des Anregungslichts.

Wenn das Anregungslicht aus einer breitbandigen bzw. polychromatischen Lichtquelle stammt, sollten alle Wellenlängen, die nicht der Anregung dienen, unterdrückt werden. Dazu wird bei hochgenauen und empfindlichen Vorrichtungen das breitbandige Licht der primären Lichtquelle mit Hilfe eines Monochromators im ersten optischen Pfad aufbereitet. Auch im Emissionspfad wird häufig ein Monochromator zur Wellenlängenselektion genutzt.

Im Rahmen dieser Anmeldung bezeichnet der Begriff "Monochromator" ein optisches System zur spektralen Isolierung eines relativ engeren Wellenlängenbereichs vorgebbarer Bandbreite um eine vorgebbare Zentralwellenlänge aus einer einfallenden Lichtintensität mit größerer spektraler Bandbreite. Derjenige Wellenlängenbereich, der vom Monochromator jeweils durchgelassen bzw. nicht geblockt wird, wird in dieser Anmeldung als "spektraler Passbereich" bezeichnet. Dessen spektrale Lage kann durch die Zentralwellenlänge angegeben werden.

Bei durchstimmbaren Monochromatoren kann die spektrale Lage des spektralen Passbereichs und/oder die Bandbreite in gewissen Grenzen eingestellt bzw. verändert werden. Bei den in dieser Anmeldung behandelten durchstimmbaren Monochromatoren kann sowohl die spektrale Lage des spektralen Passbereichs (also die Zentralwellenlänge) als auch die spektrale Breite des Passbereichs, also seine Bandbreite, stufenlos eingestellt bzw. verändert werden. Hierdurch ist besonders große Flexibilität bei den Einsatzmöglichkeiten gegeben.

Ein Monochromator kann als dispersiver Monochromator oder als Filtermonochromator ausgelegt sein.

In einem "dispersiven Monochromator" wird einfallendes Licht mittels eines dispersiven Elements (z.B. eines reflektierenden Gitters oder eines Prismas) stufenlos aufgefächert bzw. in seine spektralen Anteile zerlegt. Mittels einer Spaltblende wird aus diesem Spektrum ein engerer Spektralbereich um die gewünschte Wellenlänge selektiert, wobei die Spaltbreite dieses Spalts die Bandbreite des ausgewählten Lichts mitbestimmt. Die Breite des spektralen Passbereichs wird durch Verstellen der Spaltbreite des Spaltes eingestellt. Die spektrale Lage des spektralen Passbereichs (bzw. die Zentralwellenlänge) kann durch Drehen des dispersiven Elements verändert werden, indem durch Drehung ein anderer Teil des aufgefächerten Spektrums auf die Spaltblende fällt.

Dispersive Monochromatoren können gute Blockung und hohe spektrale Auflösung bieten, insbesondere wenn sie in Form von Doppelmonochromatoren (mit zwei hintereinander geschalteten einfachen dispersiven Monochromatoren) aufgebaut sind. Allerdings wird ein relativ großer Anteil des auftreffenden Lichts geblockt, so dass die Intensität des Nutzlichts des spektralen Passbereichs relativ gering ist.

Diesem Problem kann durch die Verwendung spektral durchstimmbarer Interferenzfilter begegnet werden, die die hohe Transmission und gute Blockung von Interferenzfiltern mit der Flexibilität von dispersiven Monochromatoren verbinden. Anordnungen, die Filterelemente zur spektralen Isolierung eines engeren Wellenlängenbereichs aus einem breiteren Wellenlängenbereich nutzen, werden hier als "Filtermonochromator" bezeichnet. Ein durchstimmbarer Filtermonochromator dient zur spektralen Isolierung eines relativ engen spektralen Passbereichs vorgebbarer Bandbreite um eine vorgebbare Zentralwellenlänge aus einer einfallenden Lichtintensität mit größerer spektraler Bandbreite mittels eines oder mehrerer Filter.

Die Anmeldung betrifft durchstimmbare Filtermonochromatoren, bei welchen sowohl die Bandbreite als auch die Zentralwellenlänge des spektralen Passbereichs unabhängig voneinander stufenlos einstellbar sind. Gattungsgemäße durchstimmbare Filtermonochromatoren weisen einen ersten Filterhalter zur Aufnahme eines ersten linear variablen Kantenfilters auf, wobei der erste Filterhalter parallel zu einer ersten Verschiebungsrichtung linear verschiebbar geführt ist. Weiterhin ist ein zweiter Filterhalter zur Aufnahme eines zweiten linear variablen Kantenfilters vorgesehen, wobei der zweite Filterhalter parallel zu einer zweiten Verschiebungsrichtung linear verschiebbar geführt ist. Im betriebsfertig montierten Zustand sind die Kantenfilter im Strahlengang des Filtermonochromators hintereinander geschaltet. Eines der Kantenfilter ist ein Langpassfilter ausgelegt, das eine obere Kantenwellenlänge definiert, so dass Wellenlängen oberhalb der oberen Kantenwellenlänge transmittiert und Wellenlängen unterhalb dieser oberen Kantenwellenlänge blockiert werden. Das andere Kantenfilter ist ein Kurzpassfilter, das eine untere Kantenwellenlänge definiert, so dass Wellenlängen unterhalb der unteren Kantenwellenlänge transmittiert und Wellenlängen oberhalb dieser unteren Kantenwellenlänge blockiert werden. Die spektrale Breite des Wellenlängenbereichs zwischen den Kantenwellenlängen bestimmt die Bandbreite. Die spektrale Lage dieses Wellenlängenbereichs bestimmt die Zentralwellenlänge, die als Mittelwert der oberen und der unteren Kantenwellenlänge definiert werden kann.

Durchstimmbare Filtermonochromatoren können z.B. in Vorrichtungen zum spektroskopischen Messen optischer Eigenschaften von Proben verwendet werden, die eine Charakterisierung von Probeneigenschaften über eine Messung der Fluoreszenz, der Lumineszenz und/oder der Absorption erlauben. Vorrichtungen, die neben Fluoreszenzmessungen auch andere Messmethoden ermöglichen, z.B. Lumineszenzmessungen, Absorptionsmessungen etc., werden häufig als Multitechnologieleser oder Multimodeleser bezeichnet. Um eine große Anzahl von Messungen in kurzer Zeit durchführen zu können, werden meist Probenmultiplex-Verfahren angewandt, bei denen die zu untersuchenden Proben in einer Matrixanordnung in Näpfchen (wells) einer Mikrotiterplatte (microwell plate) angeordnet sind und entweder sequentiell oder parallelisiert untersucht werden. Entsprechende Geräte werden häufig als Mikroplattenleser bezeichnet. Mikroplattenleser sind häufig als Multimodeleser aufgebaut, so dass mit einem einzigen Gerät wahlweise unterschiedliche Messmethoden an einer Vielzahl von Proben durchgeführt werden können.

Die Firma BMG Labtech GmbH, Ortenberg, bietet unter der Marke CLARIOstar® einen Microplate Reader an, der sowohl im Anregungsstrahlengang, also zwischen Lichtquelle und Probe, als auch im Emissionsstrahlengang, also zwischen Probe und Detektor, durchstimmbare Filtermonochromatoren mit linear variablen Filtern (LVF) verwendet. Die Strahlengänge sind über einen verschiebbaren dichroitischen Spiegel verknüpft, der als Strahlteiler fungiert.

Die DE 10 2013 224 463 A1 der Anmelderin offenbart eine z.B. in einem Mikroplattenleser verwendbare Vorrichtung zur Ermittlung von Fluoreszenzeigenschaften von Proben mit einer polychromatischen Lichtquelle, einem optischen Anregungspfad zur Übertragung von spektralen Anteilen von Licht der Lichtquelle als Anregungslicht in eine Messposition, in der eine Probe angeordnet oder anordenbar ist, und einem optischen Emissionspfad zur Übertragung von durch die Probe emittiertem Emissionslicht zu einem Detektor. Im Anregungspfad ist mindestens ein dispersiver Monochromator angeordnet. Der Anregungspfad ist frei von Interferenz-Bandpassfiltern. Im Emissionspfad eine durchstimmbare Filteranordnung mit mindestens einem spektral durchstimmbaren Transmissionsfilter angeordnet ist. Solche Vorrichtungen bieten eine hohe Flexibilität bei der Wahl von Wellenlängenbereichen sowie hohe Empfindlichkeit und einen großen Spektralbereich.

Der Wunsch nach Integration unterschiedlicher Funktionalitäten in flexibel nutzbaren Multifunktionsgeräten bringt u.a. die Herausforderung mit sich, zahlreiche optische, mechanische, elektromechanische und andere Komponenten und Bauteile ohne gegenseitige Beeinträchtigung in einem möglichst kompakten Gerät unterzubringen.

### AUFGABE UND LÖSUNG

Es ist eine Aufgabe der Erfindung, einen durchstimmbaren Filtermonochromator bereitzustellen, der eine kompakte Bauweise aufweist und kostengünstig herstellbar ist. Es ist eine weitere Aufgabe, eine damit ausgestattete Vorrichtung zum spektral aufgelösten Messen optischer Eigenschaften von Proben bereitzustellen.

Zur Lösung dieser Aufgabe stellt die Erfindung einen durchstimmbaren Filtermonochromator mit den Merkmalen von Anspruch 1 bereit. Weiterhin wird eine Vorrichtung zum spektral aufgelösten Messen optischer Eigenschaften von Proben mit den Merkmalen von Anspruch 9 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Der durchstimmbare Filtermonochromator hat einen ersten Filterhalter, der zur Aufnahme eines ersten linear variablen Kantenfilters ausgelegt ist und parallel zur einer Verschiebungsrichtung linear verschiebbar geführt ist. Ein zweiter Filterhalter dient zur Aufnahme eines zweiten linear variablen Kantenfilters, wobei der zweite Filterhalter parallel zu der Verschiebungsrichtung linear verschiebbar geführt ist.

Im betriebsfertig montierten Zustand des Filtermonochromators sind die linear variablen Kantenfilter an oder in den zugeordneten Filterhaltern montiert und liegen im Strahlengang des Filtermonochromators hintereinander, so dass sie im Betrieb nacheinander durchstrahlt werden. Eines der Kantenfilter fungiert als Langpassfilter zum Definieren einer oberen Kantenwellenlänge. Das andere Kantenfilter fungiert als Kurzpassfilter zum Definieren einer unteren Kantenwellenlänge.

Der Begriff "Kantenwellenlänge" bezeichnet hierbei diejenige Wellenlänge, bei der bei dem Kantenfilter ein Übergang zwischen hoher Transmission und hoher Blockung (bzw. niedriger Transmission) liegt. Bei einem linear variablen Kantenfilter verändert sich die spektrale Lage der Kantenlängenwelle mit der Position des durchstrahlten Bereichs entlang des Kantenfilters, wobei diese Position durch Verschieben des linear variablen Kantenfilters gegenüber der durchtretenden Strahlung stufenlos verändert werden kann.

Der Filtermonochromator weist zur Verschiebung des ersten Filterhalters und des zweiten Filterhalters nur einen einzigen Stellantrieb auf, so dass die Zentralwellenlänge und die Bandbreite des Filtermonochromators durch Ansteuerung desselben Stellantriebs unabhängig voneinander stufenlos einstellbar sind. Da für die Realisierung der gewünschten optischen Funktion nur ein einziger Stellantrieb erforderlich ist, kann der Filtermonochromator in kompakter Bauweise aufgebaut werden. Der Filtermonochromator beansprucht daher an der vorgesehenen Einbauposition nur wenig Bauraum und kann auch in engen Einbauumgebungen genutzt werden. Da nur ein einziger Stellantrieb benötigt wird, können auch Kosten für Stellantriebe eingespart werden. Auch die Kosten für Motortreiberelektronik sowie eventueller Aufwand zur Synchronisierung mehrere Stellantriebe können entfallen. Weiterhin kann Aufwand für die Justage und Kalibrierung eines zweiten Stellantriebes entfallen. Die Störanfälligkeit des Filtermonochromators kann durch Reduzierung von bewegter Mechanik verringert werden. Die optische Funktion, das heißt die Einstellgenauigkeit für die Bandbreite und die Zentrallängenwelle, kann mindestens so präzise sein wie bei herkömmlichen durchstimmbaren Filtermonochromatoren, da nicht mehrere Stellantriebe synchronisiert werden müssen. Mit dem Filtermonochromator ist eine stufenlose Bandbreitenanpassung und Wellenlängenselektion unter Verwendung linear variabler Kantenfilter mittels nur eines einzigen Antriebsmechanismus möglich.

Es ist möglich, den durchstimmbaren Filtermonochromator so aufzubauen, dass ein umschaltbares Getriebe vorgesehen wird, mit der es möglich ist, den ersten Filterhalter und den zweiten Filterhalter wechselweise an den einzigen Stellantrieb anzukoppeln. Damit könnte zunächst einer der Filterhalter über das Getriebe an den Stellantrieb angekoppelt und mittels des Stellantriebs in seine neue gewünschte Position verfahren werden und danach, nach Umschalten des Getriebes, der andere Filter an seine neue Position verfahren werden. Auch getriebefreie Varianten sind möglich.

Bei einer vorteilhaften Ausführungsform hat der Filtermonochromator ein Gehäuse. Der erste Filterhalter ist an und/oder in dem Gehäuse parallel zur Verschiebungsrichtung linear verschiebbar geführt. Die Führung für den ersten Filterhalter ist somit gehäusefest. Der zweite Filterhalter ist parallel zur Verschiebungsrichtung linear verschiebbar geführt und steht in Reibkontakt mit dem ersten Filterhalter. Die beiden Filterhalter sind also direkt oder indirekt kraftschlüssig bzw. reibschlüssig miteinander gekoppelt. Der Stellantrieb ist mit dem ersten Filterhalter zur bidirektionalen Verschiebung des ersten Filterhalters gekoppelt, so dass der erste Filterhalter mittels des Stellantriebs in zwei entgegengesetzte Richtungen verschoben werden kann. Es ist ein Anschlagsystem für den nicht direkt mit dem Stellantrieb gekoppelten zweiten Filterhalter vorgesehen. Das Anschlagsystem ist derart konfiguriert ist, dass bei einer Annäherung des angetriebenen ersten Filterhalters an eine Endposition seines Verschiebungsweges eine dem zweiten Filterhalter zugeordnete Anschlagsfläche an eine gehäusefeste Anschlagsfläche derart anschlägt, dass eine weitere Bewegung des ersten Filterhalters in Richtung der Endposition zu einer linearen Verschiebung des (angeschlagenen) zweiten Filterhalters gegenüber dem angetriebenen ersten Filterhalters führt.

Es gibt somit einen aktiv angetriebenen Filterhalter (den ersten Filterhalter) und einen passiven Filterhalter, der sich mithilfe der Bewegung des aktiv angetriebenen Filterhalters vermittelt über einen Kraftschluss verlagern bzw. verschieben lässt. Solange auf den (passiven) zweiten Filterhalter keine Kräfte wirken, die eine Relativbewegung des zweiten Filterhalters gegenüber dem ersten Filterhalter verursachen wollen, besteht zwischen dem ersten Filterhalter und dem zweiten Filterhalter Haftreibung, so dass die relativen Positionen der Filterhalter gegeneinander festgelegt sind. Bei einer Krafteinwirkung parallel zur Verschiebungsrichtung erfolgt ein Übergang von Haftreibung zur Gleitreibung dann, wenn der zweite Filterhalter an einer Anschlagsfläche anschlägt. Dann kann eine Relativverschiebung der Filterhalter gegeneinander erfolgen. Zur gemeinsamen Verschiebung beider Filterhalter zum Zwecke der Verstellung der spektralen Lage des Passbereichs wird also ein Mitnahmeeffekt über Haftreibung genutzt. Werden die Filterhalter nach Aufhebung der Haftreibung relativ zueinander verlagert, so kann die Bandbreite verstellt werden.

Es ist möglich, dass sowohl der erste Filterhalter als auch der zweite Filterhalter an einer gehäusefesten Führungseinrichtung geführt ist. Der Begriff "gehäusefest" bedeutet hier, dass das gehäusefeste Element (z.B. die Führungseinrichtung) entweder am Gehäuse ausgebildet ist oder fest am Gehäuse oder einem gehäusefest montierten Element montiert ist.

Es ist auch möglich, dass der zweite Filterhalter am und/oder im erstem Filterhalter aufgenommen und an Führungsflächen des ersten Filterhalters geführt ist. Der erste Filterhalter kann somit als Träger für den zweiten Filterhalter dienen und die zum Führen des zweiten Filterhalters vorgesehenen Einrichtungen aufweisen. Der zweite Filterhalter benötigt dann keine gehäusefeste Führung. Dadurch sind besonders kompakte Bauformen möglich.

Bei einer Weiterbildung ist eine Einstelleinrichtung zur Einstellung der zwischen dem ersten Filterhalter und dem zweiten Filterhalter wirksamen Reibkraft vorgesehen. Die Stärke des Reibkontakts kann damit, vorzugsweise stufenlos, so eingestellt werden, dass eine unbeabsichtigte Relativverschiebung der Filterhalter gegeneinander, beispielsweis bei äußeren Erschütterungen, zuverlässig unterbunden wird und gleichzeitig eine Andrückkraft zur Erzeugung des Reibkontakts nur so stark eingestellt wird, dass die Haftreibung beim Anschlag erschütterungsfrei bzw. im Wesentlichen ohne Ruck überwunden werden kann, um die gewünschte Relativverschiebung zu ermöglichen. Beispielsweise kann die Einstelleinrichtung ein federbelastetes Druckstück aufweisen, welches an einem der Filterhalter gelagert ist und mittels einer Federanordnung an eine Fläche des anderen Filterhalters gedrückt wird. Die Federkraft kann eingestellt werden, womit auch die wirksame Reibkraft eingestellt werden kann.

Bei manchen Ausführungsformen ist der Filtermonochromator so konstruiert, dass der erste Filterhalter und der zweite Filterhalter mittels des Stellantriebs in eine Durchlassposition (oder Bypass-Position) verschiebbar sind, in welcher keiner der Kantenfilter in ein Bestrahlungsbereich des Filtermonochromators angeordnet ist. Dadurch kann der Filtermonochromator fest an seiner vorgesehenen Einbauposition innerhalb der damit ausgestatteten Vorrichtung montiert sein und die Kantenfilter können allein durch Ansteuerung des Stellantriebs aus dem Strahlengang heraus gefahren werden. Die mit dem Filtermonochromator ausgestaltete Vorrichtung kann somit ohne Demontage des Filtermonochromators optisch so betrieben werden, als sei der Filtermonochromator bzw. dessen Kantenfilter Im Strahlengang nicht vorhanden.

Es ist möglich, den Filtermonochromator konstruktiv relativ einfach derart aufzubauen, dass lediglich der erste Filterhalter und der zweite Filterhalter mit den darin gehaltenen Kantenfiltern als bewegliche Elemente vorgesehen sind. Vorzugsweise ist jedoch zusätzlich ein Blendenschieber vorgesehen, der mindestens eine schlitzförmige Lichtdurchtrittsöffnung aufweist, die durch Verschieben des Blendenschiebers wahlweise in eine Arbeitsposition im Durchstrahlungsbereich bzw. Strahlengang des Filtermonochromators oder in eine Position außerhalb des Bestrahlungsbereichs verschiebbar ist. Der Blendenschieber kann zwei oder mehr Lichtdurchtrittsöffnungen bzw. Blendenöffnungen unterschiedlicher Breite aufweisen, die wahlweise in den Strahlengang gebracht werden können, um es dem Bediener zu ermöglichen, durch Verwendung der richtigen Breite einen für die Messaufgabe passenden Kompromiss zwischen ausreichender spektraler Flankensteilheit des durch die Kantenfilter transportierten Lichts einerseits und ausreichend hohem Lichtdurchsatz andererseits zu erzielen.

Vorzugsweise ist der Blendenschieber parallel zur Verschiebungsrichtung der Kantenfilter bzw. der Filterhalter verschiebbar geführt und mit dem Stellantrieb zur Verschiebung gekoppelt, so dass der Blendenschieber mittels des Stellantriebs verschiebbar ist. Dadurch kann eine weitere Funktionalität des Filtermonochromators allein durch den einzigen Stellantrieb des Filtermonochromators gesteuert werden.

Bei manchen Ausführungsformen ist vorgesehen, dass der Blendenschieber in eine Durchlassposition (bzw. Bypass-Position) verschiebbar ist, in welcher der Durchstrahlungsbereich bzw. der Strahlengang des Filtermonochromators nicht durch den Blendenschieber oder eine Lichtdurchtrittsöffnung des Blendenschiebers begrenzt ist. In dieser Bypass-Position kann also der Filtermonochromator ohne Blendenwirkung betrieben werden.

Ausführungsformen, die es ermöglichen, sowohl die Kantenfilter als auch eine den Strahldurchtritt begrenzende Blende völlig aus dem Strahlengang des Filtermonochromators herauszufahren, sind unter anderem vorteilhaft bei Verwendung des Filtermonochromators in Vorrichtungen, bei denen im Strahlengang vor dem Filtermonochromator und/oder im Strahlengang hinter dem Filtermonochromator eine Anordnung zur Aufnahme von diskreten Bandpassfiltern oder Kantenfiltern angeordnet ist. In diesem Fall können sich im Bypass-Modus des Filtermonochromators nur die diskreten Filter im Strahlengang befinden. Umgekehrt können vorzugsweise bei Bedarf die diskreten Filter ihrerseits vollständig aus dem Strahlengang entfernt werden, so dass nur der Filtermonochromator zur spektralen Filterung im entsprechenden Abschnitt des Strahlengangs verwendet wird. Für bestimmte Anwendungen kann es darüber hinaus sinnvoll sein, sowohl die diskreten Filter (einen oder mehrere), als auch den Filtermonochromator in den Strahlengang einzufahren, um beispielweise eine bessere Fremdlichtunterdrückung (Blockung) oder eine höhere spektrale Flankensteilheit zu erreichen.

Die Erfindung betrifft auch eine Vorrichtung zum spektral aufgelösten Messen optischer Eigenschaften von Proben, wobei die Vorrichtung an mindestens einer Stelle eines Strahlengangs einen durchstimmbaren Filtermonochromator der in dieser Anmeldung beschriebenen Art aufweist. Bei der Vorrichtung kann es sich beispielsweise um eine Vorrichtung zur Ermittlung von Fluoreszenzeigenschaften von Proben handeln. Die Vorrichtung kann Teil eines Fluorometers oder als Dual-Label-Readers oder eines Multi-Label-Readers sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
- Fig.1: zeigt schematisch ein Ausgangsbeispiel einer Vorrichtung zur Ermittlung von Fluoreszenzeigenschaften von Proben, wobei im Emissionsstrahlengang ein durchstimmbarer Filtermonochromator gemäß einem Ausführungsbeispiel angeordnet ist;
- Fig. 2: zeigt in den Teilfiguren 2A bis 2C unterschiedliche Betriebskonfigurationen eines durchstimmbaren Filtermonochromators vor, während und nach der Verstellung des spektralen Passbereichs;
- Fig.3: zeigt verschiedene Ansichten eines Ausführungsbeispiels eines durchstimmbaren Filtermonochromators in isometrischer Ansicht (Fig. 3A), in einem Querschnitt senkrecht zur Verfahrrichtung der Filterhalter (Fig. 3B) und in Draufsicht (Fig. 3C).

### DETAILLIERTE BESCHREIBUNG DER AUSFÜHRUNGSBEISPIELE

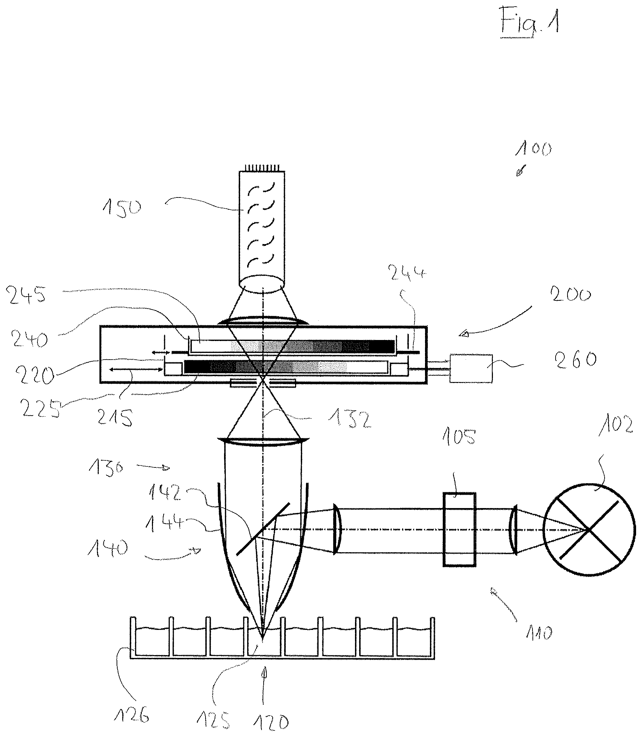

In Fig. 1 ist schematisch ein Ausführungsbeispiel einer Vorrichtung 100 zur Ermittlung von Fluoreszenzeigenschaften von Proben gezeigt. Sie ist Bestandteil eines nicht näher dargestellten Messgeräts, bei dem es sich z.B. um ein Fluorometer, einen Dual-Label-Reader oder einen Multi-Laber-Reader handeln kann.

In der Beschreibung werden relative Positionen optischer Elemente mit Präpositionen wie "zwischen", "vor", "hinter" oder dergleichen beschrieben. Diese Präpositionen beziehen sich auf Positionen entlang des optischen Pfades von der Lichtquelle über die Messposition bis zum Detektor.

Die Vorrichtung 100 hat eine primäre Lichtquelle 102 in Form eine Xenon-Lampe. Es kann sich je nach Anwendung um eine Blitzlampe oder eine Dauerstrich-Lampe handeln. Alternativ kann z.B. auch eine Glühlampe als Lichtquelle verwendet werde. Die Lichtquelle hat ein breites Emissionsspektrum im sichtbaren Spektralbereich ("Weißlicht").

Ein optischer Anregungspfad 110 führt von der Lichtquelle 102 bis zu einer Messposition 120, in der sich bei der Nutzung der Vorrichtung eine Probe 125 befindet. Die Probe befindet sich in einer Vertiefung bzw. einem Topf einer mit vielen Töpfen ausgestatteten Mikroplatte 126.

Die optischen Elemente des optischen Anregungspfades 110 dienen der Übertragung von spektralen Anteilen von Licht der primären Lichtquelle 102 als Anregungslicht in die Messposition 120. In der Probe 125 befindet sich eine Substanz, die durch das Anregungslicht dazu angeregt werden kann, Fluoreszenzlicht zu emittieren. Das Fluoreszenzlicht ist gegenüber dem Anregungslicht zu niedrigeren Energien bzw. größeren Wellenlängen verschoben. Das Ausmaß der spektralen Rotverschiebung ist für die Substanz spezifisch und wird als Stokes-Verschiebung bzw. Stokes-Shift bezeichnet.

Das Emissionslicht gelangt über einen optischen Emissionspfad 130 von der Probe 125 zu einem Detektor 150, der in Abhängigkeit vom auftreffenden Licht elektrische Signale erzeugt, die einer nicht gezeigten Auswerteeinheit zugeführt werden, um das Emissionslicht zur Charakterisierung der Probe spektral auszuwerten. Bei dem Detektor kann es sich z.B. um einen Photomultiplier handeln.

Eine Strahlteilereinrichtung 140 dient zur Separation von Anregungspfad 120 und Emissionspfad 130 oberhalb der Messposition 120. Die Strahlteilereinrichtung umfasst einen oberhalb der Messposition angeordnet ebenen Umlenkspiegel 142 zum Umlenken des seitlich einfallenden Anregungslichts von oben in die Messposition 120 sowie einem nach oben geöffneten Parabolspiegel 144, der das von der Probe über einen breiten Raumwinkelbereich nach oben emittierte Emissionslicht sammelt und in Richtung des Detektors kollimiert.

Bei der Vorrichtung aus Fig. 1 erfolgt die Anregung mit Hilfe eines Monochromators 105, der im Beispielsfall ein dispersiver Monochromator ist. Er kann als Einfachmonochromator oder Doppelmonochromator ausgelegt sein. Der Anregungspfad kann z.B. so ausgelegt sein wie in der DE 10 2013 224 463 A1 beschrieben.

Das von der Probe 125 emittierte Emissionslicht der Fluoreszenz ist gegenüber dem Anregungslicht spektral rotverschoben und strahlt prinzipiell in den gesamten Raumwinkelbereich oberhalb der Probe. Von diesem Raumwinkelbereich wird nur derjenige Teil genutzt, der vom Parabolspiegel reflektiert wird.

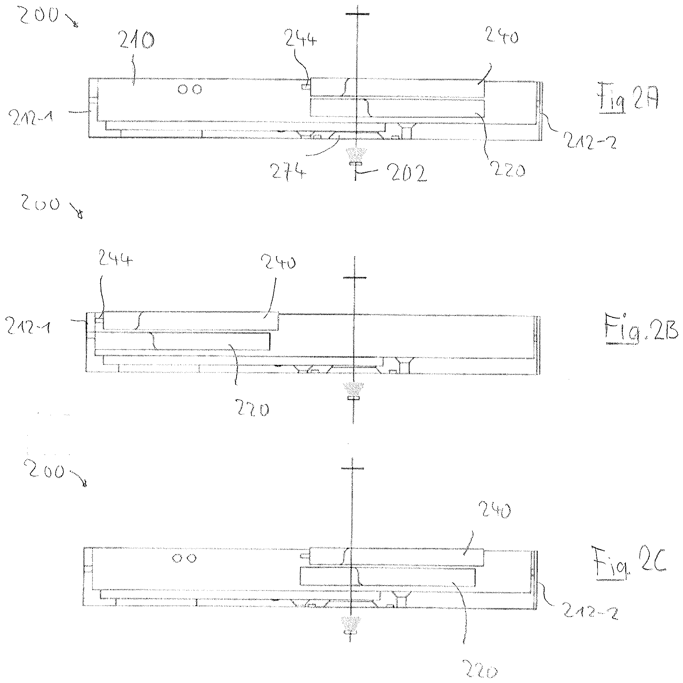

Im Emissionspfad 130 ist zwischen der Strahlteilereinrichtung 140 und dem Detektor 150 ein durchstimmbarer Filtermonochromator 200 zur spektralen Isolierung eines engen spektralen Passbereichs vorgebbarer Bandbreite um eine vorgebbare Zentralwellenlänge aus einer einfallenden Lichtintensität mit größerer spektraler Bandbreite angeordnet. Die Bandbreite und die Zentralwellenlänge des spektralen Passbereichs sind unabhängig voneinander stufenlos einstellbar. In Fig. 1 ist der Filtermonochromator schematisch dargestellt. Anhand von Fig. 2 werden Funktionen des Filtermonochromators näher erläutert. Die 3A bis 3C zeigen verschiedene Darstellungen eines Ausführungsbeispiels im Detail.

Der Filtermonochromator 200 hat ein kastenförmiges Gehäuse 210, in welchem eine erster Filterhalter 220 zur Aufnahme eines ersten linear variablen Kantenfilters 225 sowie ein zweiter Filterhalter 240 zur Aufnahme eines zweiten linear variablen Kantenfilters 245 untergebracht sind. Die Filterhalter sind jeweils innerhalb des lichtdicht schließbaren Gehäuses 210 parallel zu einer Verschiebungsrichtung 215 (Doppelpfeile) linear verschiebbar geführt. Im eingebauten Zustand des Filtermonochromators verläuft die Verschiebungsrichtung 215 senkrecht zur optischen Achse 132 des Emissionspfads am Ort des Filtermonochromators. Bei einem betriebsfertig montierten Filtermonochromator sind die Kantenfilter 225, 245 in die jeweils vorgesehenen Filterhalter 220, 240 eingebaut. Die Kantenfilter sind dann im Strahlengang des Filtermonochromators hintereinander geschaltet. Eines der Kantenfilter (im Beispiel von Fig. 1 das zweite Kantenfilter 245) fungiert als Langpassfilter, das eine obere Kantenwellenlänge definiert. Das andere Kantenfilter (erstes Kantenfilter 225) fungiert als Kurzpassfilter und definiert daher eine untere Kantenwellenlänge.

Jedes der Kantenfilter ist im Beispielsfall ein Linear Variables Filter (LVF). Jedes der Kantenfilter wird durch Aufbringen keilförmiger, dielektrischer Wechselschichten auf einen transparenten Träger erzeugt. Daher kann durch laterales Verschieben der Kantenfilter in der Verschiebungsrichtung 215 (Doppelpfeil) senkrecht zur Durchstrahlungsrichtung für jedes der Kantenfilter separat die in der jeweiligen Verschiebungsstellung effektive Kantenwellenlänge verändert werden. Der Begriff "Kantenwellenlänge" bezeichnet hierbei jene Wellenlänge, bei der der Übergang zwischen hoher Transmission und hoher Blockung (niedriger Transmission) liegt. Durch das Hintereinanderschalten eines variablen Kurzpassfilters und eines variablen Langpassfilters wird ein variables Bandpassfilter geschaffen, dessen in der jeweiligen Konfiguration wirksamen effektiven Kantenwellenlängen unabhängig voneinander kontinuierlich verstellt werden können. Werden die beiden Kantenfilter unabhängig voneinander lateral (in Verschiebungsrichtung) verschoben, lassen sich (in gewissen Grenzen) beliebige Passbereichsbreiten um beliebig liegende Zentralwellenlängen einstellen.

Für alle Verstellungsoperationen am Filtermonochromator ist ein einziger Stellantrieb 260 vorgesehen, der an geeigneter Stelle am Gehäuse montiert sein kann. Der Stellantrieb bzw. Stellmotor ist an die Steuerung der Vorrichtung 100 angeschlossen und kann über diese Steuerung angesteuert werden. Der Stellantrieb 260 ist mit dem im Gehäuse unten liegenden ersten Filterhalter 220 gekoppelt und kann diesen bidirektional parallel zur Verschiebungsrichtung 215 verschieben. Für den zweiten Filterhalter 240 ist kein gesonderter Stellantrieb vorgesehen, dieser wird ebenfalls mittels des Stellantriebs 260 verschoben, und zwar indirekt vermittelt über den ersten Filterhalter 220, mit den er reibschlüssig gekoppelt ist

Anhand von Fig. 2 wird die Funktionsweise anhand eines Ausführungsbeispiels ähnlich Fig. 1 näher erläutert. Fig. 2A zeigt den Filtermonochromator 200 in einer ersten Betriebskonfiguration, bei der am Filtermonochromator die maximal mögliche Bandbreite des spektralen Passbereichs eingestellt ist. Fig. 2B zeigt den Filtermonochromator während der Umstellung von der ersten auf eine zweite Betriebskonfiguration zur Änderung der Bandbreite.

Die Fig. 2C zeigt den Filtermonochromator in der zweiten Betriebskonfiguration, die der minimal einstellbaren Bandbreite entspricht.

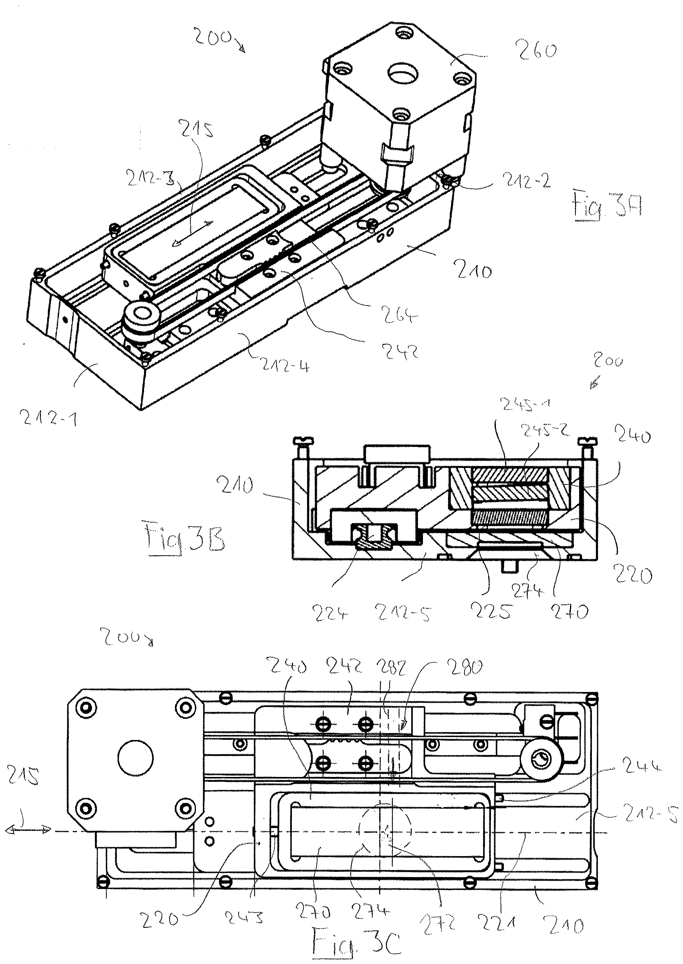

Das Gehäuse 210 ist im Wesentlichen quaderförmig und wird an seinen in Verschiebungsrichtung 215 gegenüberliegenden Schmalseiten durch eine erste Gehäusewand 212-1 (links) bzw. durch eine zweite Gehäusewand 212-2 (rechts) abgeschlossen. Im Gehäuseboden (an der Lichteintrittsseite) sowie im Gehäusedeckel (auf der Lichtaustrittsseite sind runde Ausnehmungen bzw. Durchlassöffnungen vorgesehen, durch die hindurch Licht durch den Filtermonochromator in Bereich von dessen optisch nutzbarer Achse 202 hindurchtreten kann (vgl. auch Durchlassöffnung bzw. Ausnehmung 274 in Fig. 3B und 3C). Diese verläuft bei richtig eingebautem Filtermonochromator koaxial zur optischen Achse 132 des Emissionspfads.

Im Inneren des Gehäuses sind der erste Filterhalter 220 und der zweite Filterhalter 240 übereinander liegend so montiert, dass sie jeweils parallel zur Verschiebungsrichtung 215, also in Längsrichtung des Gehäuses, verschoben werden können. Der einzige Stellantrieb 260 ist am Gehäuse montiert, elektrisch an die Steuerung der Vorrichtung 100 angeschlossen und kann über diese Steuerung angesteuert werden. Der Stellantrieb 260 ist mit dem im Gehäuse unten liegenden ersten Filterhalter 220 kraftübertragend gekoppelt und kann diesen bidirektional parallel zur Verschiebungsrichtung 215 über den kompletten Verschiebungsweg zwischen den Gehäusewänden 212-1, 212-2 verschieben.

Der zweite Filterhalter 240 steht im großflächigen Reibkontakt mit dem ersten Filterhalter. Durch den Kraftschluss zwischen den Filterhaltern ist gewährleistet, dass der zweite Filterhalter 240 vom ersten Filterhalter 220 bei dessen Verschiebung mitgenommen wird, solange keine äußeren Kräfte die Haftreibung überwinden. Nach Aufhebung der Haftreibung kann der zweite Filterhalter 240 gegenüber dem ersten Filterhalter 220 parallel zur Verschiebungsrichtung in eine neue Relativposition verlagert werden.

In der ersten Betriebskonfiguration (Fig. 2A) sind die beiden von den Filterhaltern getragenen Kantenfilter so positioniert, dass sich eine maximale Bandbreite des spektralen Passbereichs ergibt. Beispielsweise kann die untere Kantenwellenlänge bei 410 Nanometer und die obere Kantenwellenlänge bei 430 Nanometer liegen, so dass sich eine Bandbreite von 20 Nanometern und eine Zentralwellenlänge von 420 Nanometern ergeben.

Im Beispielsfall soll nun die Bandbreite bis zur minimalen Bandbreite verringert werden. Dazu wird mit Hilfe des Stellantriebs 260 der daran gekoppelte erster Filterhalter in Richtung der ersten Gehäusewand 212-1 verschoben. Der reibschlüssig mit dem ersten Filterhalter gekoppelte zweite Filterhalter wird bei dieser Verschiebung zunächst mitgenommen. Am zweiten Filterhalter ist an der der ersten Gehäusewand 212-1 zugewandten Seite ein Anschlagstift 244 angebracht, der in der in Fig. 2A gezeigten Konfiguration nach links über die darunterliegende Stirnseite des ersten Filterhalters 240 hinausragt. Dieser Anschlagstift, der am oberen Filterhalter (für den Langpassfilter) angebracht ist, ermöglicht nun die Einstellung der Bandbreite. Bis zum Anschlag des Anschlagsstifts an der ersten Gehäusewand 212-1 verändert sich die relative Lage des zweiten Filterhalters gegenüber dem ersten Filterhalter nicht. Ab dem Moment des Anschlags (Berührungskontakt zwischen Anschlagsstift 244 und erster Gehäusewand 212-1) führt ein weiteres Verfahren bzw. Verschieben des ersten Filterhalters 220 in Richtung der ersten Gehäusewand 212-1 dazu, dass die Haftreibung zwischen den beiden Filterhaltern aufgehoben wird und in Gleitreibung übergeht, so dass sich der erste Filterhalter gegenüber dem (aufgrund des Anschlags nicht mehr weiter bewegbaren) ersten Filterhalter verschiebt. Der erste Filterhalter 220 mit dem darin enthaltenen Kurzpassfilter wird weiter nach links verfahren, während der zweite Filterhalter mit dem darin enthaltenen Langpassfilter durch den Anschlagstift in seiner Bewegung blockiert ist.

Somit kann durch die gezielte Einstellung des Fahrwegs des ersten Filterhalters 220 in der Endphase der Bewegung zur ersten Gehäusewand 212-1 der erste Filterhalter bzw. der erste Kantenfilter gegenüber dem zweiten Filterhalter bzw. dem zweiten Kantenfilter parallel zur Verschiebungsrichtung stufenlos verfahren werden. Der erste Filterhalter kann so weit verfahren werden, bis auch der erste Filterhalter an der ersten Gehäusewand 212-1 anschlägt. In dieser Endstellung ist die minimale Bandbreite erreicht, die beispielsweise bei 10 Nanometer liegen kann. Jede beliebige Relativposition in Verschiebungsrichtung zwischen dem ersten und dem zweiten Filterhalter führt zu einer entsprechenden Bandbreite, die zwischen der minimalen Bandbreite und der maximalen Bandbreite liegt. Beispielsweise können die beiden Filterhalter so weit nach links gefahren werden, bis der Anschlagstift des zweiten Filterhalter an der ersten Gehäusewand anschlägt, während jedoch der erste Filterhalter nicht vollständig bis zum Anschlag an die erste Gehäusewand 212-1 verfahren wird. Hierdurch sind zwischen minimaler und maximaler Bandbreite liegende intermediäre Bandbreiten einstellbar.

Nach Abschluss der Einstellung bzw. Verstellung der Bandbreite wird die Filterkombination (Kombination der beiden Filterhalter mit den enthaltenen Kantenfiltern) mit Hilfe des Stellantriebs 260 wieder in eine Betriebskonfiguration zurückgefahren, in welcher der für die Durchstrahlung gewünschte Bereich der Kantenfilter wieder im Bereich der Achse 202 des Filtermonochromators liegt. Diese zweite Betriebskonfiguration ist beispielhaft in Fig. 2C gezeigt.

Soll, beispielsweise ausgehend von der zweiten Betriebsstellung mit minimaler Bandbreite, die Zentralwellenlänge unter Beibehaltung der eingestellten Bandbreite verändert werden, so werden mit Hilfe des Stellantriebs 260 beide Filterhalter synchron miteinander parallel zur Verschiebungsrichtung so verfahren, dass die beiden hintereinander geschalteten linear variablen Kantenfilter an einer anderen Position durchstrahlt werden, die dann der gewünschten Zentralwellenlänge entspricht. So kann auch die spektrale Lage der Zentralwellenlänge allein mit Hilfe des Stellantriebs 260 eingestellt werden.

Bei der gezeigten Konfiguration können größere Bandbreiten eingestellt werden, indem die Filterkombinationen (mit erstem Filterhalter und zweitem Filterhalter) am rechten Gehäuserand (zweite Gehäusewand 212-2) relativ zueinander verschoben werden. Kleinere Bandbreiten können entsprechend am der gegenüberliegenden Gehäusewand (erste Gehäusewand 212-1) eingestellt werden.

Mithilfe des Anschlagssystems, das die Anschlagstifte am zweiten Filterhalter und die damit zusammenwirkenden Anschlagsflächen am Gehäuse umfasst, ist es somit möglich, mit nur einem Stellantrieb die verschiedenen Verstellungsbewegungen bei der Umstellung bzw. Einstellung des Filtermonochromators zu bewirken.

Anhand der Fig. 3A bis 3C wird nun eine andere mögliche Konstruktion eines Anwendungsbeispiels in größerem Detail erläutert. Aus Gründen der Übersichtlichkeit werden für entsprechende Merkmale die gleichen Bezugszeichen verwendet wie bei den vorhergehenden Ausführungsbeispielen.

Das quaderförmige, längliche, lichtdicht abschließbare Gehäuse 210 hat an seiner als Lichteintrittsseite vorgesehenen Seite einen Gehäuseboden 212-5, an dem einstückig vier Gehäusewände 212-1 bis 212-4 ausgebildet sind, die einen im Wesentlichen quaderförmigen Innenraum einschließen. Der austrittsseitige Gehäusedeckel ist abnehmbar und kann mittels Schrauben auf den Gehäusewänden befestigt werden. Der Stellantrieb bzw. Stellmotor 260 ist fest am Gehäuse derart montiert, dass seine Antriebswelle nach unten in das Innere des Gehäuses ragt. Der Stellantrieb 260 ist an einen geschlossenen Bandantrieb gekoppelt, der einen Zahnriemen 264 aufweist, der über zwei achsparallel drehende Umlenkrollen geführt ist, von denen eine drehfest auf der Antriebswelle des Stellantriebs sitzt. Der Zahnriemen des Bandantriebs kann mittels des Stellantriebs 260 in beide Umlaufrichtungen um genau vorgebbare Strecken bewegt werden.

Ein erster Filterhalter 220 ist mit dem Zahnriemen des Bandantriebs mit Hilfe einer Klemmvorrichtung 242 gekoppelt, so dass der erste Filterhalter 220 in Antriebsverbindung mit dem Stellantrieb 260 steht. Der erste Filterhalter 220 ist auf einer am Gehäuseboden befestigten linearen Führungsschiene 224 derart geführt, dass er der Bewegungsrichtung des Zahnriemens des Bandantriebs entlang einer Hauptachse 221 des Filtermonochromators (parallel zur Verschiebungsrichtung 215 der Kantenfilter) derart folgen kann, dass in Abhängigkeit der Drehrichtung des Stellantriebs eine lineare, bidirektionale Bewegung des ersten Filterhalters zwischen zwei Endpositionen erfolgen kann. Die zwei Endpositionen werden durch die Innenseiten der senkrecht zur Hauptachse 221 verlaufenden Gehäusewände 212-1, 212-2 an den Schmalseiten des Gehäuses gebildet. Bei Anschlag des ersten Filterhalters 220 an der unter dem Stellmotor liegenden Gehäusewand 212-2 befinden sich die Filterhalter in einer Bypass-Position außerhalb des durch die Durchlassöffnung 274 begrenzten Durchlassbereichs des Filtermonochromators. Dann befindet sich keiner der Kantenfilter oder der Filterhalter im Strahlengang.

Im ersten Filterhalter 220 ist eine rechteckförmige Ausnehmung zur Aufnahme des ersten linear variablen Kantenfilters 225 (Kurzpassfilter) vorgesehen, der besonders in Fig. 3B gut zu erkennen ist.

An der Oberseite des ersten Filterhalters ist eine parallel zur Hauptachse langgestreckte Ausnehmung mit glatten Seitenwänden vorgesehen. In diese Ausnehmung wird der zweite Filterhalter 240 von oben eingesetzt. Dieser trägt im fertigen montierten Zustand das zweite linear variable Kantenfilter 245, das als Langpassfilter fungiert. Der erste Filterhalter 220 fugiert hier als Träger für den zweiten Filterhalter 240 und stellt Führungsflächen zur Führung des zweiten Filterhalters gegenüber dem ersten Filterhalter bereit.

Es kann prinzipiell ausreichen, ein einziges variables Kurzpassfilter und ein einziges variables Langpassfilter zu kombinieren, wie in den schematischen Darstellungen der Fig. 1 und 2 gezeigt. Da jedoch die Blockung handelsüblicher variabler Kantenfilter in der Regel im Bereich von 3OD bis 4OD liegt, kann es sinnvoll sein, mindestens zwei Filter gleichen Typs hintereinander zu schalten, um eine ausreichende Blockung zu erzielen. In der Regel reicht es aus, nur das Langpassfilter zu verdoppeln, da dieses für die Unterdrückung des eventuell noch vorhandenen Anregungslichts zuständig ist und nur für das Anregungslicht eine Urblockung auf idealerweise OD6 oder mehr) erreicht werden sollte. Dementsprechend sind im Ausführungsbeispiel der Fig. 3 innerhalb des zweiten Filterhalters 240 zwei als Langpassfilter genutzte linear variable Kantenfilter 245-1, 245-2 aufgenommen. Dabei ist eines der Kantenfilter parallel zum ersten Kantenfilter (Kurzpassfilter) eingebaut, während das andere Langpassfilter um wenige Grad gekippt eingebaut ist, um störende Reflektionen zu unterdrücken.

Der erste Filterhalter 220 mit der Ausfräsung zur Aufnahme des zweiten Filterhalters sowie der zweite Filterhalter 240 stehen an mehreren ebenen Flächen in großflächigem Berührungskontakt miteinander. Diese Kontaktflächen sind so bearbeitet, dass sich der zweite Filterhalter in reibschlüssigem Kontakt mit dem ersten Filterhalter 220 befindet. Die für den zweiten Filterhalter 240 zugelassene Bewegungsrichtung relativ zum ersten Filterhalter ist so ausgeführt, dass sie parallel zur Bewegungsrichtung des ersten Filterhalters (Verschiebungsrichtung 215) verläuft.

Der zweite Filterhalter 240 ist an seinen kurzen Seiten mit stiftförmigen Anschlagselementen 244 bzw. 243 ausgestattet, die so angeordnet sind, dass sie parallel zur Bewegungsrichtung durch eine zugeordnete Durchlassbohrung im ersten Filterhalter 220 hindurchtreten können. Je nach relativer Position des ersten Filterhalters 220 zum zweiten Filterhalter 240 ragen die Anschlagstifte unterschiedlich weit über die Außenfläche des ersten Filterhalters 220 hinaus.

Wird der erste Filterhalter 220 nun mit Hilfe des Stellantriebs 260 in Richtung einer der beiden Endpositionen verfahren, so kann der Fall eintreten, dass bei der Annäherung an die jeweilige Endposition die zugehörigen Anschlagstifte bzw. der zugehörige Anschlagstift derart an eine zugehörige gehäusefeste Anschlagsfläche ansteht, dass eine weitere Verschiebung des zweiten Filterhalters 240 in Bewegungsrichtung des ersten Filterhalters blockiert wird, während eine weitere Bewegung des ersten Filterhalters 220 in Richtung der vorausliegenden Endposition noch möglich ist. Auf diese Weise kann die relative Ausrichtung des zweiten Filterhalters 240 relativ zum ersten Filterhalter 220 verändert werden, wodurch die spektrale Bandbreite verändert werden kann. Der Einstellbereich der spektralen Bandbreite ist hier durch die freie Wegstrecke bestimmt, um die der zweite Filterhalter relativ zum ersten Filterhalter verfahren werden kann.

Bei dieser Variante wird somit der zweite Filterhalter 240 innerhalb des ersten Filterhalters 220 linear verschiebbar geführt. Es ist auch möglich, jeden der Filterhalter gesondert vom anderen Filterhalter an einer gehäusefesten Führung zu führen.

Die relative Verschiebung der Filterhalter gegeneinander beim Verstellen des spektralen Passbereichs und der Bandbreite soll möglichst feinfühlig möglich sein, so dass die zwischen diesen Elementen direkt oder indirekt wirkende Reibkraft nicht so groß sein sollte, dass beim Übergang von Haftreibung zur Gleitreibung bei der Verstellung rückartige Bewegungen entstehen können. Andererseits sollte eine einmal eingestellte Relativposition sich nicht selbsttätig verstellen können, beispielsweise bei äußeren Erschütterungen. Als Möglichkeit zur Optimierung des Reibschlusses ist beim Ausführungsbeispiel eine Einstelleinrichtung 280 zur stufenlosen Einstellung der zwischen den beiden Filterhaltern wirkenden Reibkraft vorgesehen. Der erste Filterhalter 220 hat hierzu unterhalb der Klemmeinrichtung eine gestrichelt dargestellte Querbohrung 282, die an einer Führungsfläche für den zweiten Filterhalter 240 mündet. Innerhalb der Bohrung ist ein federbelastendes Druckstück (Pfeilsymbol) angebracht, welches im Wesentlichen aus einer Druckfeder, einer gehärteten Stahlkugel sowie einem Gehäuse mit Außengewinde besteht. Im montierten Zustand wird die Stahlkugel mittels der Druckfeder an eine Seitenfläche des zweiten Filterhalters 240 gedrückt. Die Federkraft ist mittels einer Schraube einstellbar. Somit können die in den Gleitpaarungen wirkenden Andruckkräfte und damit auch die dort entstehenden Reibkräfte mit Hilfe der Einstelleinrichtung 280 in gewissen Grenzen stufenlos eingestellt werden.

Der Filtermonochromator 200 ist mit einer integrierten Blendeneinrichtung mit einem Blendenschieber 270 ausgestattet. Unterhalb des durchstrahlbaren Bereiches, in welchem die variablen Kantenfilter angeordnet sind, ist in dem Gehäuseboden eine flache Rechtecknut eingearbeitet. In dieser ist der Blendenschieber 270 linear verschiebbar geführt. Der Blendenschieber weist in Verschiebungsrichtung mit Abstand nebeneinander liegend mehrere schlitzförmige Lichteintrittsöffnungen bzw. Eintrittsblenden unterschiedlicher Schlitzbreite. Der Blendenschieber kann wahlweise als Schlitzblendenträger, Shutter (Verschluss) und "Freischalter" für hohen Lichtdurchsatz eingesetzt werden. In Fig. 3C ist die schlitzförmige Lichtdurchtrittsöffnung bzw. Blende 272 im Bereich der kreisförmigen Ausnehmung 274 gezeigt, die den Durchstrahlungsbereich des Filtermonochromators begrenzt.

Der Blendenschieber 270 ist mit dem Stellantrieb 260 derart gekoppelt, dass der Blendenschieber mit Hilfe des Stellantriebs linear parallel zur Verschiebungsrichtung 215 der Filterhalter verschoben werden kann, um wahlweise eine der Blendenöffnungen in eine Arbeitsposition in den Durchlassbereich zu bringen oder diesen Bereich ohne Blende zu belassen, so dass mit höherem Lichtdurchsatz gearbeitet werden kann (Bypass-Position des Blendenschiebers).

Hierzu ist der Verfahrmechanismus der Spaltblende bzw. des Blendenschiebers 270 so ausgeführt, dass die Filteranordnung (Anordnung mit dem ersten Filterhalter 220 und dem zweiten Filterhalter 240) die Spaltblende an einem Mitnehmer in eine Ruheposition verfahren kann. Der Mitnehmer ist so gestaltet, dass er von der Filteranordnung erfasst wird, wenn diese sich gerade nicht mehr mit ihrer effektiv wirksamen Filterfläche im Strahlengang befindet. Zur Rückstellung der Spaltblende bzw. des Blendenschiebers in die Arbeitsposition im Strahlengang ist eine mit dem Blendenschieber gekoppelte Feder vorgesehen, die den Blendenschieber selbständig in die Arbeitsposition verfährt, sobald der Mitnehmer von der Filteranordnung freigegeben wird, wenn diese wieder in die Messposition verfahren wird.

Die schlitzförmige Blende des Blendenschiebers dient dazu, ein definiertes Lichtbündel auf die aktiven Flächen der Kantenfilter der linear-variablen Filteranordnung zu lenken und Fremdlicht zu unterdrücken. Durch unterschiedliche Spaltbreiten kann ein Kompromiss zwischen hoher spektraler Flankensteilheit des transmittieren Lichts einerseits und hohem Lichtdurchsatz andererseits gewählt werden.

In der Ausführungsform von Fig. 3 ist der Filtermonochromator so gestaltet, dass sowohl die Filteranordnung als auch die Spaltblende vollständig aus dem Strahlengang gefahren werden können, so dass der Filtermonochromator funktional vollständig umgangen werden kann. Diese Anordnung ist besonders vorteilhaft, wenn dem Filtermonochromator vor- oder nachgeschaltet eine Anordnung zur Aufnahme diskreter Bandpass- oder Kantenfilter angeordnet ist, so dass sich im Bypass-Modus nur die diskreten Filter im Strahlengang befinden. Umgekehrt können ggf. die diskreten Filter ihrerseits vollständig aus dem Strahlengang entfernt werden, so dass nur der Filtermonochromator zur spektralen Filterung eingesetzt wird. Für bestimmte Anwendungen kann es darüber hinaus sinnvoll sein, sowohl die diskreten Filter als auch den Monochromator in den Strahlengang einzufahren, um beispielsweise eine bessere Fremdlichtunterdrückung (Blockung) oder eine höhere spektrale Flankensteilheit zu erreichen.

Ein Filtermonochromator der in dieser Anmeldung beschriebenen Art kann an unterschiedlichen Stellen innerhalb einer optischen Vorrichtung eingesetzt bzw. verwendet werden. Bei der optischen Vorrichtung kann es sich insbesondere um eine Vorrichtung zum spektral aufgelösten Messen optischer Eigenschaften von Proben handeln. Beispielsweise kann der Monochromator 105 im Anregungsstrahlengang von Fig. 1 ein Filtermonochromator mit einem einzigen Stellantrieb sein.

## Patentansprüche

1. Durchstimmbarer Filtermonochromator (200) zur spektralen Isolierung eines engen spektralen Passbereichs vorgebbarer Bandbreite um eine vorgebbare Zentralwellenlänge aus einer einfallenden Lichtintensität mit größerer spektraler Bandbreite, wobei die Bandbreite und die Zentralwellenlänge des spektralen Passbereichs unabhängig voneinander stufenlos einstellbar sind, umfassend:
einen ersten Filterhalter (220) zur Aufnahme eines ersten linear variablen Kantenfilters (225), wobei der erste Filterhalter parallel zu einer Verschiebungsrichtung (215) linear verschiebbar geführt ist;
einen zweiten Filterhalter (240) zur Aufnahme eines zweiten linear variablen Kantenfilters (245), wobei der zweite Filterhalter parallel zu der Verschiebungsrichtung (215) linear verschiebbar geführt ist; wobei
die Kantenfilter (225, 245) im betriebsfertig montierten Zustand des Filtermonochromators im Strahlengang des Filtermonochromators hintereinander geschaltet sind;
eines der Kantenfilter ein Langpassfilter ist, das eine oberen Kantenwellenlänge definiert, und
das andere Kantenfilter ein Kurzpassfilter ist und eine unteren Kantenwellenlänge definiert;
**dadurch gekennzeichnet, dass**
der Filtermonochromator zur Verschiebung des ersten Filterhalters (220) und des zweiten Filterhalters (240) nur einen einzigen Stellantrieb (260) aufweist, so dass die Zentralwellenlänge und die Bandbreite des Filtermonochromators durch Ansteuerung desselben Stellantriebs (260) unabhängig voneinander stufenlos einstellbar sind.

2. Filtermonochromator nach Anspruch 1, **dadurch gekennzeichnet, dass**
der Filtermonochromator ein Gehäuse (210) aufweist;
der erste Filterhalter (220) in dem Gehäuse parallel zu der Verschiebungsrichtung (215) linear verschiebbar geführt ist;
der zweiten Filterhalter (240) parallel zur Verschiebungsrichtung (215) linear verschiebbar geführt ist und in Reibkontakt mit dem ersten Filterhalter (220) steht;
der Stellantrieb (260) mit dem ersten Filterhalter (220) zur bidirektionalen Verschiebung des ersten Filterhalters gekoppelt ist; und
ein Anschlagsystem für den zweiten Filterhalter (240) vorgesehen ist, wobei das Anschlagsystem derart konfiguriert ist, dass bei einer Annäherung des angetriebenen ersten Filterhalters (220) an eine Endposition des Verschiebungswegs eine dem zweiten Filterhalter (240) zugeordnete Anschlagsfläche an eine gehäusefeste Anschlagsfläche derart anschlägt, dass eine weitere Bewegung des ersten Filterhalters (220) in Richtung der Endposition zu einer linearen Verschiebung des angeschlagenen zweiten Filterhalters (240) gegenüber dem angetriebenen ersten Filterhalter (220) führt.

3. Filtermonochromator nach Anspruch 1 oder 2, **dadurch gekennzeichnet, dass** der zweite Filterhalter (240) im erstem Filterhalter (220) aufgenommen und an Führungsflächen des ersten Filterhalters geführt ist.

4. Filtermonochromator nach einem der vorhergehenden Ansprüche, **gekennzeichnet durch** eine Einstelleinrichtung (280) zur Einstellung der zwischen dem ersten Filterhalter (220) und dem zweiten Filterhalter (240) wirkenden Reibkraft.

5. Filtermonochromator nach einem der vorhergehenden Ansprüche, **dadurch gekennzeichnet, dass** der erste Filterhalter (220) und der zweite Filterhalter (240) mittels des Stellantriebs (260) in eine Durchlassposition verschiebbar sind, in welcher keiner der Kantenfilter in einem Durchstrahlungsbereich des Filtermonochromators angeordnet ist.

6. Filtermonochromator nach einem der vorhergehenden Ansprüche, **gekennzeichnet durch** einen Blendenschieber (270), der mindestens eine schlitzförmige Lichtdurchtrittsöffnung (272) aufweist, die durch Verschieben des Blendenschiebers wahlweise in eine Arbeitsposition in einem Durchstrahlungsbereich des Filtermonochromators (200) oder in eine Position außerhalb des Durchstrahlungsbereichs verschiebbar ist.

7. Filtermonochromator nach Anspruch 6, **dadurch gekennzeichnet, dass** der Blendenschieber (270) parallel zur Verschiebungsrichtung (215) verschiebbar geführt und mittels des Stellantriebs (260) verschiebbar ist.

8. Filtermonochromator nach Anspruch 6 oder 7, **dadurch gekennzeichnet, dass** der Blendenschieber (270) mittels des Stellantriebs (260) in eine Durchlassposition verschiebbar ist, in welcher der Durchstrahlungsbereich des Filtermonochromators nicht durch den Blendenschieber oder eine Lichtdurchtrittsöffnung des Blendenschiebers begrenzt ist.

9. Vorrichtung (100) zum spektral aufgelösten Messen optischer Eigenschaften von Proben (120), insbesondere zur Ermittlung von Fluoreszenzeigenschaften von Proben, **gekennzeichnet durch** mindestens einen durchstimmbaren Filtermonochromator (200) nach einem der vorhergehenden Ansprüche.
